# EUROPEAN PATENT APPLICATION

(11) **EP 0 783 861 A1**
(43) Date of publication of application: **16.07.1997**
(21) Application number: 97300088.8
(22) Date of filing: 08.01.1997
(51) Int. Cl.: A47J 37/12

(54) **Electrically-heated appliance**

(30) Priority: 12.01.1996 GB 9600603
(71) Applicant: KENWOOD MARKS LIMITED, Havant, Hampshire PO9 2HN (GB)
(72) Inventor: Barnet, Edward, Emsworth, Hants PO10 7JN (GB); Cook, Kevin, Waterlooville, Hants P08 0JF (GB)
(74) Representative: Marsh, Robin Geoffrey

(57) **Abstract**

An electrically-heated appliance, such as a domestic deep fryer, is provided with a thermostat device (10) which is in direct thermal contact with the heating element (5) of the device. This arrangement reduces the risk of damage caused by excessive heating due to overshoot of the heating element if controlled by a remotely mounted thermostat (6) and enables the appliance to incorporate a high powered heater for good cooking performance. Preferably, if the appliance is a fryer, another thermostat (6) is used to monitor the temperature of the cooking oil. Preferably also the fryer has a removable tank (3) to which the heating element (5) is permanently secured and an outer casing (1), into which the tank is fitted for operation, which contains the thermostats and an electrical connection device for enabling power to be fed to the heating element.

## Description

This invention relates to electrically-heated appliances, particularly of the type using a sheathed heating element in which the temperature of the appliance is thermostatically controlled. One specific example of such an appliance is an electric deep fryer primarily for domestic use.

Conventional deep fryers usually comprise a metal container or tank for containing the fat or oil in which food is fried, the tank being heated by an electrical heating element and being permanently fixed within an outer casing closable by a lid. A wire basket for holding food to be fried is removably placed in the tank. Since the casing contains electrical components, the combined casing and tank cannot be safely immersed in water and is therefore difficult to clean. In order to solve this problem, deep fryers have been proposed in which the tank is removable from the casing and is capable of being immersed in water to facilitate its cleaning. In order to achieve this, all of the electrical components, except possibly the heating element, are fixedly mounted in the outer casing. In a preferred arrangement, the heating element is mounted in thermal contact with the underside of the tank, and follows a meandering path to distribute heat over a substantial part of the tank's underside.

Deep fryers are required to operate with the tank and its contents at a temperature set by the user, and the electrical components therefore generally include a thermostat to switch the electrical power on or off as appropriate in order to maintain the desired temperature. A thermal fuse can also be provided and is arranged to blow if an excessive temperature is detected. In order to monitor the operating temperature, thermal contact needs to be reliably established and maintained between the thermostat and the external surface of the removable tank when it is located in the outer casing.

To obtain good quality food products cooked by the fryer, rapid initial heating of the oil as well as a fast thermal recovery time after the uncooked food is placed in the heated oil are necessary, which requires the use of a high-powered heating element. However, the provision of a thermostat only monitoring the temperature of the oil via thermal contact with the outside of the tank causes a thermal lag between the actual temperature of the high-powered element and the operation of the thermostat, which results in an overshoot of the temperature of the element. Such an overshoot can lead to overheating and this can cause problems such as distortion of the heating element in its mounting, plastics materials of the fryer melting, and the thermal fuse blowing. These problems could be overcome by using a lower powered heating element but then the required rapid thermal response time could not be obtained.

Any abnormal use of the fryer, such as using too little or no oil, particularly with a high-powered element, can also result in the above-mentioned problems occurring.

It is an object of the present invention to provide a deep fryer or other electrically-heated appliance in which a high-powered heating element can be used, with reduced risk of overshoot of the temperature of the heating element occurring.

According to one aspect of the invention, there is provided an electrically-heated appliance having a heating element and thermostat means at least in thermal contact with the heating element for sensing and controlling the operating temperature thereof.

According to another aspect of the invention, there is provided a deep fryer comprising an outer casing closable by a lid, a container for containing oil and located (at least for operation) in said outer casing, a heating element in thermal contact with the container for heating the oil contained therein, a first thermostat device for sensing and controlling the temperature of the oil in the container, and a second thermostat device in thermal contact with the heating element for sensing and controlling the temperature of the heating element.

Preferably, the second thermostat device is in direct thermal contact with the heating element. The first and second thermostat device may be connected in series with each other in the power supply connection line to the heating element. The first thermostat device preferably has a variable threshold temperature value settable by a user, and the second thermostat device preferably has a fixed threshold temperature value.

In a preferred arrangement, the container is removable from the outer casing. In this arrangement, the heating element may be mounted on the container, preferably on the underside thereof, and the heating element and the outer casing are provided with cooperable electrical connection means for providing power to the heating element when the container is operatively located in the outer casing. The second thermostat device is preferably fixedly located in the outer casing in such a position as to establish direct thermal contact with the heating element when the container is operatively located in the outer casing. The first thermostat device is preferably fixed in the outer casing and has a thermal contact which contacts an outer face of the container when the container is located in the outer casing.

The fryer may include a thermal fuse, which is activatable in the event of failure of one or both of the thermostat devices. The thermal fuse is preferably mounted in the base of the outer casing.

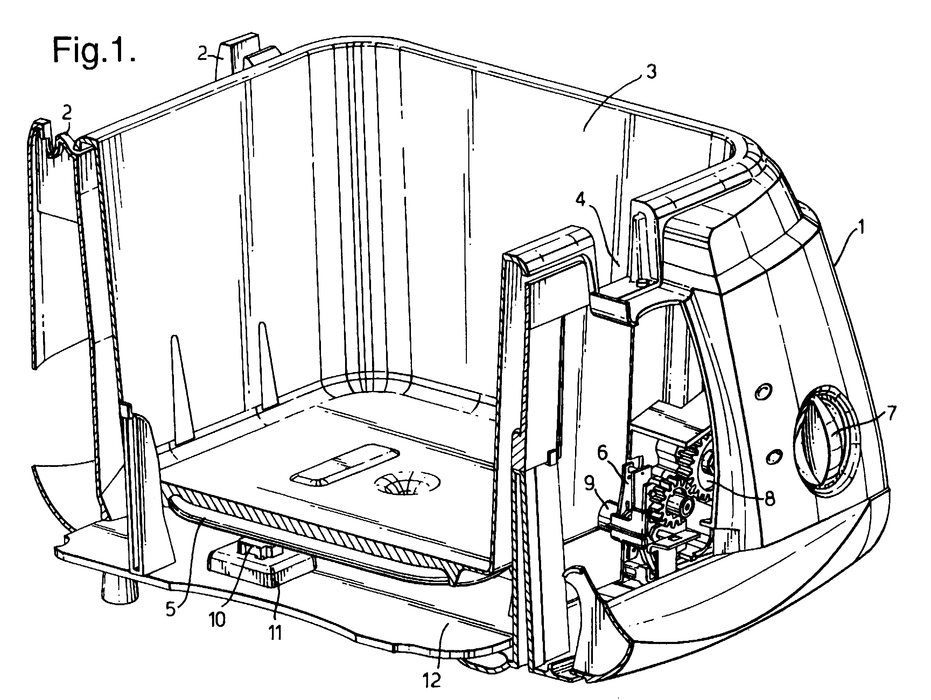

The invention will now be described by way of example with reference to the accompanying drawings, in which:-
Figure 1 shows a perspective sectional view of a deep fryer in accordance with an embodiment of the invention;

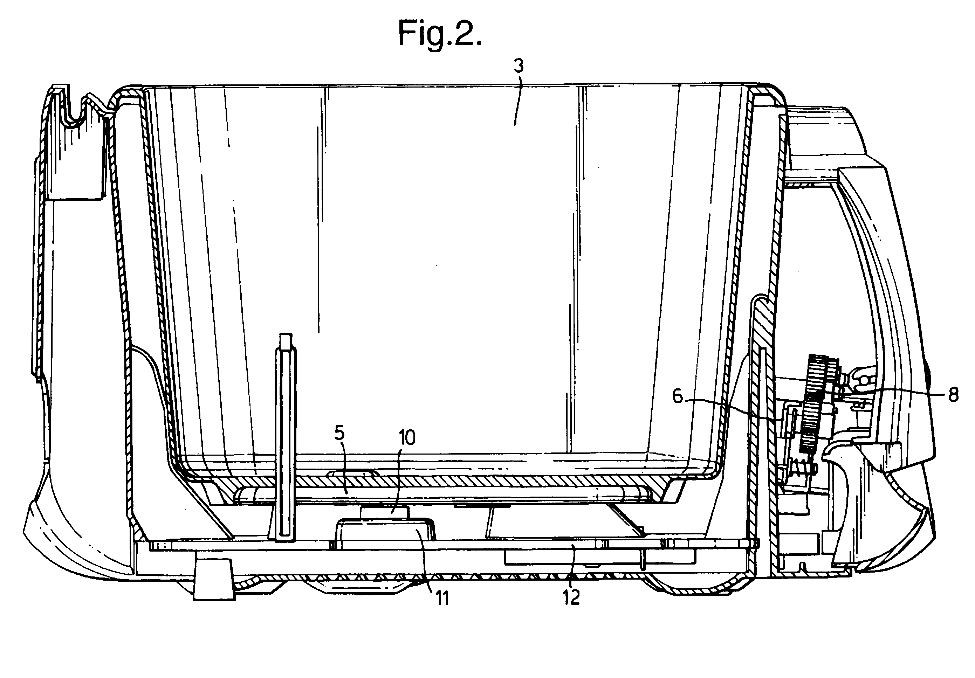

Figure 2 shows a vertical sectional view of the deep fryer; and

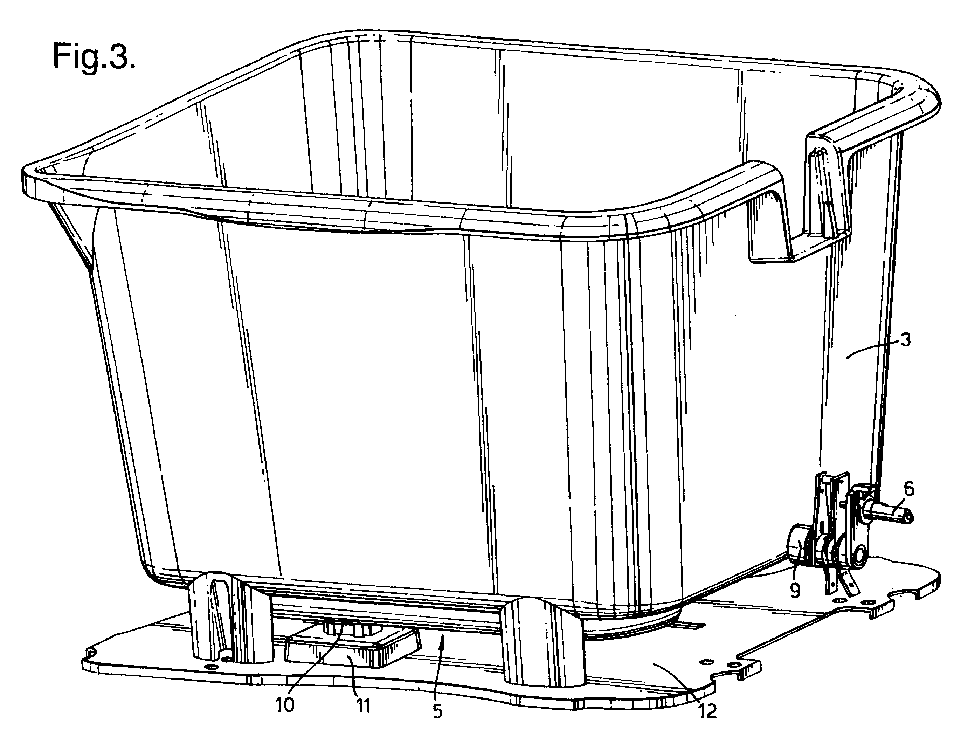

Figure 3 shows a perspective view of the container and some components of the outer casing of the fryer.

Referring now to the drawings, a deep fryer comprises an outer casing 1 closable by a lid (not shown) pivotable about supports 2. A container or tank 3 is removably located within the outer casing 1 and is intended to contain oil for cooking foods. A removable wire basket (not shown) for holding the food is placed in the tank with the basket handle (also not shown) supported in a recess 4 in the rims of the outer casing 1 and the tank 3.

A tubular heating element 5 having a high power rating such as up to 3kW, is mounted in a groove (not shown) formed on the underside of the tank 3, such that the heating element is in thermal contact with the tank, and this heats the oil in the tank when the element is energised. When the removable tank 3 is located in the outer casing 1, electrical end connections (not shown) of the heating element 5 co-operate with electrical connections (also not shown) fixed in the outer casing 1 in order to supply power to the heating element.

The temperature of the oil in the tank 3 is controlled by a primary thermostat 6 settable by a user-operable control 7 on the outer casing 1 and a gearing arrangement 8 interconnecting the control 7 and thermostat 6. The primary thermostat has a springloaded contact button 9 which is urged against and remains in good thermal contact with the outer side of the tank 3 when the tank is located in the outer casing so as to monitor the temperature of the tank, and thus the oil contained in it, and to control the power to the heating element 5 in accordance with the temperature setting of the control 7.

A secondary thermostat 10 is mounted in a housing 11 on a baseplate 12 of the outer casing 1. This secondary thermostat has a fixed threshold temperature value and is positioned such that the heating element 5 directly contacts it when the tank 3 is operatively placed in the outer casing 1.

The primary and secondary thermostats 6, 10 are connected in series with each other in the power supply line to the heating element 5, so that activation of either thermostat will disconnect the power to the element. Additionally, a thermal fuse (not shown) is carried by the baseplate 12 and is arranged to blow in the event of failure of one or both of the thermostats.

With the secondary thermostat 10 in direct thermal contact with the heating element 5, any thermal lag which occurs with the primary thermostat 6 can be avoided, or at least greatly reduced. Further reduction of the thermal lag can be achieved by the housing 11 of the secondary thermostat being constructed and configured to have a low thermal mass.

During normal operation of the fryer, the primary thermostat 6 is set to the temperature required and power is supplied to the high-powered heating element 5 to heat up the oil in the tank 3 as quickly as possible. The secondary thermostat 10 directly monitors the temperature of the heating element and prevents its temperature from exceeding a maximum operating level. The secondary thermostat continues to control the maximum temperature level until the primary thermostat 6 absorbs enough heat from the heated oil to control the oil temperature without the secondary thermostat operating.

During abnormal use of the fryer, for example when an insufficient level of oil is in the tank 3, the rapid response of the secondary thermostat 10 can be used to control and limit the temperature of both the heating element and the oil. If the fryer is operated with no oil in the tank, the secondary thermostat again restricts the temperature of the heating element, which allows sufficient time for heat to be conducted via the tank 3 to the primary thermostat which then controls the temperature of the tank and heating element, without causing damage to the fryer by excessive heat.

With temperatures controlled in this manner, the risks of the thermal fuse blowing and plastics materials of the fryer melting are substantially reduced. Furthermore, the performance of the fryer is improved with food cooked at the correct temperatures giving better results. The fast heat-up time of a high-powered heating element ensures that the temperature of the heated oil recovers quickly after food to be cooked is immersed in it, thereby producing better quality fried food and providing more opportunity for the frying of unusual foods.

Additionally, accurate and fast temperature control of the heating element reduces the stress on the element, as well as its sheath and mounting. It also enables lower priced and lower temperature plastics to be used in the manufacture of the fryer. The secondary thermostat, as indicated previously, acts as an additional safety device during abnormal use of the fryer by providing early sensing and controlling of high oil temperature when the oil level in the tank is too low or early temperature sensing of the fryer itself when no oil is used.

Also, the reduced tolerances of the temperature of the heating element enables the primary thermostat and thermal fuse to be located at more suitable positions for optimum control, performance and accuracy.

Whilst a particular embodiment of the invention has been described, it will be evident that modifications may be made without departing from the scope of the invention. For example, the invention could be applied to electrically-heated appliances other than deep fryers, which use a sheathed heating element and for which temperature control is important. Examples of such appliances include woks, cook-pans, electric grills, and irons. The present invention could also be extended to give "fast heat", "super", "boost" or similar heating options for the user to control. Furthermore, side-mounted heating element arrangements at high powers could be arranged to give faster warm-up without damage to the appliance body. Additionally, the present invention could remove the need for side wall temperature sensing of the appliance and possibly permit a hybrid, two-part bowl construction with a moulded upper part and a cast lower part.

## Claims

1. An electrically-heated appliance having a heating element (5) and thermostat means (10) at least in thermal contact with the heating element for serving and controlling the operating temperature thereof.

2. An appliance according to Claim 1 including means constraining said thermostat means to operate at a fixed threshold temperature.

3. An appliance according to either of Claims 1 or 2 having an outer casing (1) and a removable container (3) placeable therein for operation of the appliance, said thermostat means (10) being fixedly mounted in said outer casing and said heating element (5) being affixed to the removable container (3), and the relative disposition of the thermostat means (10) and the heating element (5) in the outer casing (1) and on the removable container (3) respectively being such as to place said thermostat means (10) in direct thermal contact with said heating element (5) when the removable container (3) is operatively located within the outer casing (1).

4. An appliance according to any preceding claim wherein said thermostat means (10) is located in a housing (11) of low thermal mass.

5. A deep fryer comprising an outer casing (1) closable by a lid, a container (3) for containing oil and located, at least for operation, in said outer casing (1), a heating element (5) in thermal contact with the container (3) for heating the oil contained therein, a first thermostat device (6) for sensing and controlling the temperature of the oil in the container (3), and a second thermostat device (10) in thermal contact with the heating element (5) for sensing and controlling the temperature of the heating element.

6. A deep fryer according to claim 5 including user-operable means (7, 8) for varying the operating temperature of said first thermostat device (6).

7. A deep fryer according to claim 6 wherein the user-operable means (7, 8) and the first thermostat device (6) are mounted to said outer casing (1) and a springloaded contact (9) is provided to establish thermal contact between said first thermostat device (6) and said container (3) when the container is operatively located within the outer casing (1).

8. A deep fryer according to any of claims 5 to 7 inclusive wherein said second thermostat device (10) has a fixed threshold operating temperature.

9. A deep fryer according to claim 8 wherein said second thermostat device (10) is located in a housing (11) of low thermal mass.

10. A deep fryer according to any of claims 5 to 9 inclusive wherein said first and second thermostat devices (6, 10) are electrically connected in series with said heating element (5).

11. A deep fryer according to any of claims 5 to 10 inclusive wherein said container (3) is removable from said outer casing (1) and said heating element (5) is permanently mounted on said container (3).

12. A deep fryer according to claim 11 wherein said heating element (5) comprises a tubular heating element mounted in a groove formed in the underside of the container (3) and meanders to distribute heat over a significant part of the underside of said container (3).
